# EUROPEAN PATENT APPLICATION

(11) **EP 4 439 331 A1**
(43) Date of publication of application: **02.10.2024**
(21) Application number: 23193149.4
(22) Date of filing: 24.08.2023
(51) Int. Cl.: G06F 16/34

(54) **INFORMATION PROCESSING SYSTEM, INFORMATION PROCESSING PROGRAM, AND INFORMATION PROCESSING METHOD**

(30) Priority: 27.03.2023 JP 2023049823
(71) Applicant: FUJIFILM Business Innovation Corp., Minato-ku Tokyo (JP)
(72) Inventor: HASEGAWA, Ryo, Yokohama-shi, Kanagawa (JP)
(74) Representative: Kurig, Thomas

(57) **Abstract**

An information processing system includes at least one processor configured to display an annotation given to a document on a display screen together with partial information specified as a part of a content of the document corresponding to a content of the annotation.

## Description

### BACKGROUND OF THE INVENTION

### (i) Field of the Invention

The present invention relates to an information processing system, an information processing program, and an information processing method.

### (ii) Description of Related Art

JP2012-203491A discloses a document processing device including an extraction unit that extracts, from image data obtained by digitizing a document medium including a handwritten part, the handwritten part, and a sticky note addition unit that adds a content of the image data extracted by the extraction unit to the image data as sticky note information.

JP2014-186379A discloses an annotation search device including a feature extraction unit that extracts an annotation feature from an input document and an annotation for the input document, and an annotation search unit that searches annotation information according to a user's use from annotation information corresponding to the input document and including the annotation feature.

JP2015-230533A discloses a document system that manages a document, the document system including a giving unit that gives a priority to individual objects included in the document, and a display unit that displays the objects included in the document in an order according to the priority in response to a certain user operation.

### SUMMARY OF THE INVENTION

An object of the present invention is to provide an information processing system, an information processing program, and an information processing method in which, as compared to a configuration in which a part of a document is uniformly displayed together with an annotation given to the document regardless of a content of the annotation in a case in which the annotation is displayed together with the part of the document, it is possible to display partial information that is a part of the content of the document related to the content of the annotation.

According to a first aspect of the present disclosure, there is provided an information processing system including at least one processor configured to: display an annotation given to a document on a display screen together with partial information specified as a part of a content of the document corresponding to a content of the annotation.

According to a second aspect of the present disclosure, there is provided the information processing system according to the first aspect, in which the processor may be configured to: in a case in which a reduction image representing information on the document displayed on the display screen is selected, display the annotation and the partial information in association with the reduction image without opening the document.

According to a third aspect of the present disclosure, there is provided the information processing system according to the first or second aspect, in which the processor may be configured to: when a plurality of annotations are given to the document, display the plurality of annotations and the partial information corresponding to the annotations in a list on the display screen.

According to a fourth aspect of the present disclosure, there is provided the information processing system according to the first or second aspect, in which the processor may be configured to: when a plurality of annotations are given to the document, display the plurality of annotations in a list on the display screen; and when the annotation displayed on the display screen is selected, display the partial information corresponding to the annotation on the display screen.

According to a fifth aspect of the present disclosure, there is provided the information processing system according to any one of the first to fourth aspects, in which the processor may be configured to: when work information that requires work on the document is acquired from the content of the annotation, display a work instruction item for transitioning from the partial information to a work processing screen on the display screen.

According to a sixth aspect of the present disclosure, there is provided the information processing system according to any one of the first to fifth aspects, in which the processor may be configured to: specify the partial information by executing an analysis of a content of information described in a vicinity of a position to which the annotation is given in the document.

According to a seventh aspect of the present disclosure, there is provided the information processing system according to the sixth aspect, in which a range of the partial information may differ according to an attribute of the annotation.

According to an eighth aspect of the present disclosure, there is provided the information processing system according to the sixth or seventh aspect, in which the content of the information may be an image described in the document, and the processor may be configured to: specify the partial information such that at least a part of the image is included.

According to a ninth aspect of the present disclosure, there is provided the information processing system according to the sixth or seventh aspect, in which the content of the information may include text information described in the document, and the processor may be configured to: execute the analysis by a natural language analysis to specify the partial information such that the text information includes a specific meaning content.

According to a tenth aspect of the present disclosure, there is provided the information processing system according to any one of the first to fifth aspects, in which the processor may be configured to: specify the partial information based on a selection operation of the part of the content of the document by a person who has given the annotation.

According to an eleventh aspect of the present disclosure, there is provided the information processing system according to any one of the first to tenth aspects, in which the processor may be configured to: receive a change of the partial information by a person who has given the annotation for the partial information specified based on the content of the annotation.

According to a twelfth aspect of the present disclosure, there is provided the information processing system according to the eleventh aspect, in which the processor may be configured to: when the change of the partial information is received from the person who has given the annotation, present a candidate for a range of the partial information according to the content of the annotation.

According to a thirteenth aspect of the present disclosure, there is provided an information processing program causing a computer to execute a process including: displaying an annotation given to a document on a display screen together with partial information specified as a part of a content of the document corresponding to a content of the annotation.

### [0019-1] According to a fourteenth aspect of the present disclosure, there is provided an information processing method including: displaying an annotation given to a document on a display screen together with partial information specified as a part of a content of the document corresponding to a content of the annotation.

With the information processing system according to the first aspect of the present invention, as compared to a configuration in which a part of a document is uniformly displayed together with an annotation given to the document regardless of a content of the annotation in a case in which the annotation is displayed together with the part of the document, it is possible to display the partial information that is the part of the content of the document related to the content of the annotation.

With the information processing system according to the second aspect of the present invention, as compared to a case in which the partial information is displayed when the annotation is selected in a state in which the document is opened, it is possible to quickly check the location of the annotation given to the document and the partial information related to the content of the annotation.

With the information processing system according to the third aspect of the present invention, as compared to a case in which the partial information related to the content of the annotation is displayed when the annotation displayed on the display screen is selected, it is possible to quickly check the annotation and the partial information.

With the information processing system according to the fourth aspect of the present invention, as compared to a case in which the annotation and the partial information are displayed in a list on the display screen, it is possible to secure a space for displaying a large number of annotations.

With the information processing system according to the fifth aspect of the present invention, as compared to a case in which the work is performed by opening the document and moving to the location of the annotation in the document, it is possible to quickly perform work processing on the annotation.

With the information processing system according to the sixth aspect of the present invention, as compared to a case in which only the partial information designated by a user is displayed, it is possible to quickly display the partial information.

With the information processing system according to the seventh aspect of the present invention, as compared to a case in which the partial information is uniformly displayed regardless of the attribute of the annotation, it is easy to check the partial information.

With the information processing system according to the eighth aspect of the present invention, as compared to a case in which the partial information is displayed only by the text information, it is easy to check the partial information related to the annotation.

With the information processing system according to the ninth aspect of the present invention, as compared to a case in which the text information is displayed as the partial information without any changes, it is easy to check the partial information related to the annotation.

With the information processing system according to the tenth aspect of the present invention, as compared to a case in which the range of the partial information corresponding to the annotation is uniformly set, it is easy to reflect the intention of the person who has given the annotation.

With the information processing system according to the eleventh aspect of the present invention, as compared to a case in which the partial information cannot be changed, it is easy to reflect the intention of the person who has given the annotation.

With the information processing system according to the twelfth aspect of the present invention, as compared to a case in which the partial information is designated only manually by the user, it is easy to change the partial information.

With the information processing program according to the thirteenth aspect of the present invention, it is possible to, in a case in which the annotation given to the document is displayed together with the part of the document, display the partial information that is the part of the content of the document related to the content of the annotation, as compared to a configuration in which the part of the document is uniformly displayed together with the annotation regardless of the content of the annotation.

### [0032-1] With the information processing method according to the fourteenth aspect of the present invention, it is possible to, in a case in which the annotation given to the document is displayed together with the part of the document, display the partial information that is the part of the content of the document related to the content of the annotation, as compared to a configuration in which the part of the document is uniformly displayed together with the annotation regardless of the content of the annotation.

### BRIEF DESCRIPTION OF THE DRAWINGS

Exemplary embodiment(s) of the present invention will be described in detail based on the following figures, wherein:
Fig. 1 is a diagram showing a schematic configuration of an information processing system including a user terminal according to a first exemplary embodiment;
Fig. 2 is a block diagram showing a hardware configuration of the user terminal;
Fig. 3 is a block diagram showing an example of a functional configuration of the user terminal;
Fig. 4A is a diagram showing an example of a document to which a plurality of annotations are given;
Fig. 4B is a diagram showing an example of a sticky note, an annotation, and a preview display range of the document displayed on a display unit of the user terminal;
Fig. 5 is a diagram showing an example of a list screen of the annotation and the preview display range displayed on the display unit of the user terminal according to the first exemplary embodiment;
Fig. 6 is a diagram showing an example in which a work button is given to the annotation and the preview display range in the user terminal according to the first exemplary embodiment;
Fig. 7 is a flowchart showing a flow of processing of the user terminal according to the first exemplary embodiment;
Fig. 8 is a diagram showing an example of a list screen of an annotation displayed on a display unit of a user terminal according to a second exemplary embodiment;
Fig. 9 is a diagram showing an example of a preview display range and a work button corresponding to one annotation in a case in which the one annotation displayed on the display unit of the user terminal according to the second exemplary embodiment is selected;
Fig. 10Ais a diagram showing an example of a sticky note, an annotation, and a preview display range of a document displayed on a display unit of a user terminal according to a third exemplary embodiment;
Fig. 10B is a diagram showing an example of a list display of the annotation and the preview display range displayed on the display unit of the user terminal according to the third exemplary embodiment;
Fig. 11 is a diagram showing a first example in which the preview display range that is a part of a content of the document is changed in the user terminal according to the third exemplary embodiment;
Fig. 12 is a diagram showing a second example in which the preview display range that is a part of the content of the document is changed in the user terminal according to the third exemplary embodiment; and
Fig. 13 is a flowchart showing a flow of processing of the user terminal according to the third exemplary embodiment.

### DETAILED DESCRIPTION OF THE INVENTION

Hereinafter, exemplary embodiments of the present invention will be described in detail with reference to the accompanying drawings. It should be noted that, in each drawing, the identical reference numerals are given to the identical or equivalent components and parts. In addition, the dimensional ratios in the drawings are exaggerated for convenience of description, and may differ from the actual ratios.

### [First Exemplary Embodiment]

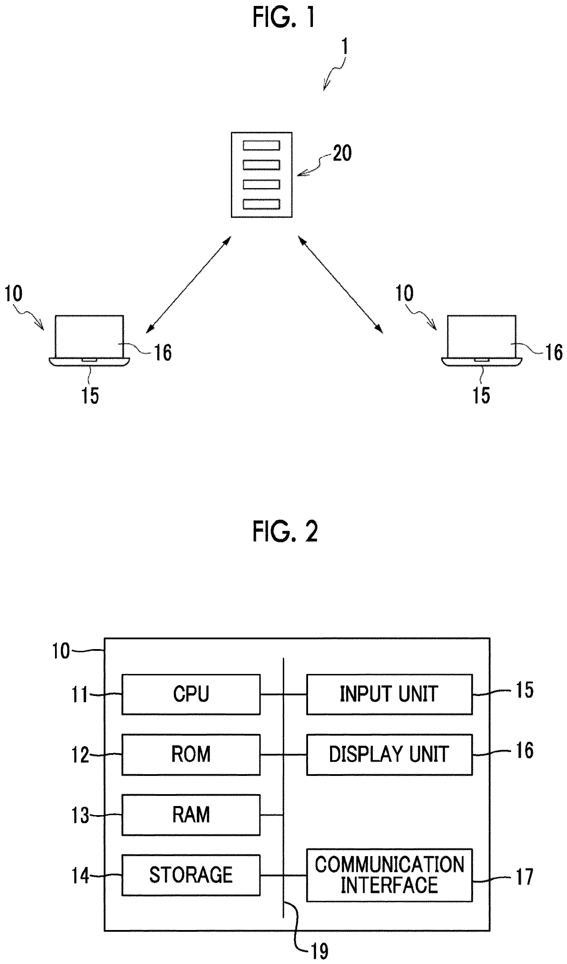

Fig. 1 is a diagram showing a schematic configuration of an information processing system including a user terminal according to the first exemplary embodiment.

As shown in Fig. 1, an information processing system 1 includes a plurality of user terminals 10 used by users, respectively, and a server 20. As an example, in the information processing system 1, the plurality of user terminals 10 and the server 20 are connected to each other via the Internet, a wired network, or a wireless network. In Fig. 1, the information processing system 1 is shown as a device connected via a wired network as an example. The number of the user terminals 10 is not particularly limited. The "system" in the present disclosure includes both a system configured by a plurality of devices and a system configured by a single device. For example, in a case of the system configured by the single device, the user terminal 10 alone can correspond to the information processing system.

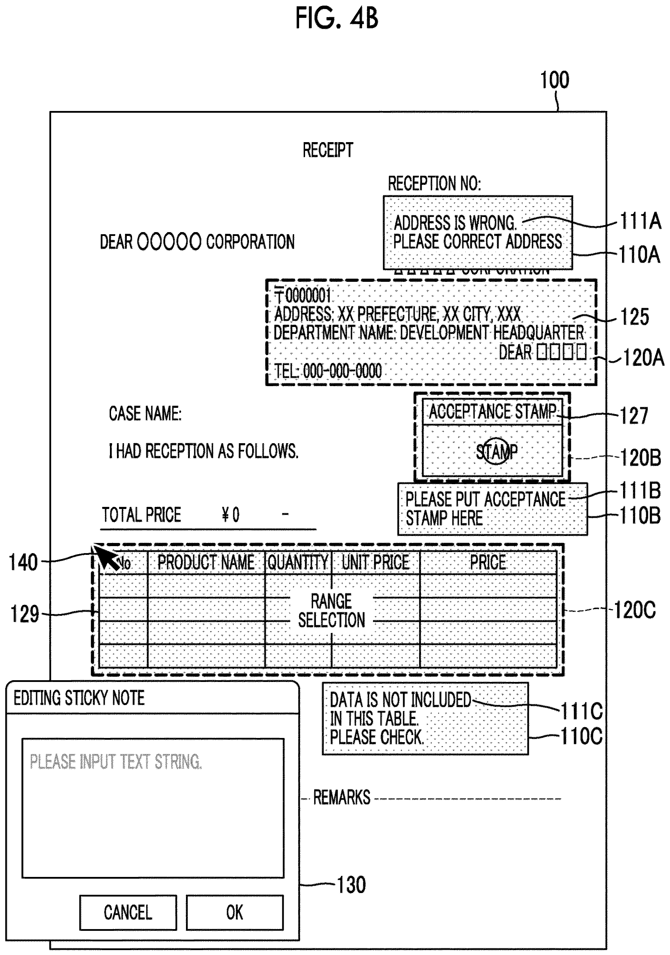

The user terminal 10 is configured by a computer device, such as a desktop computer, a laptop computer, or a tablet computer. The user terminal 10 is a device that performs creation of a document 100, giving of an annotation 111 to the document 100, setting of a preview display range 120 that is a part of a content of the document corresponding to a content of the annotation 111, and the like (see Fig. 4B). Here, the annotation 111 is an example of an annotation. In addition, the preview display range 120 is an example of partial information that is the part of the content of the document 100. For giving of the annotation 111 to the document 100, the setting of the preview display range 120 corresponding to the content of the annotation 111, and the like, the description thereof will be made below.

The user terminal 10 includes an input unit 15 and a display unit 16. The user terminal 10 performs, for example, creation of the document 100 by the input unit 15, giving of the annotation 111 to the document 100, and the like. The document 100 to which a plurality of annotations 111 are given is displayed on the display unit 16 (see Fig. 4B).

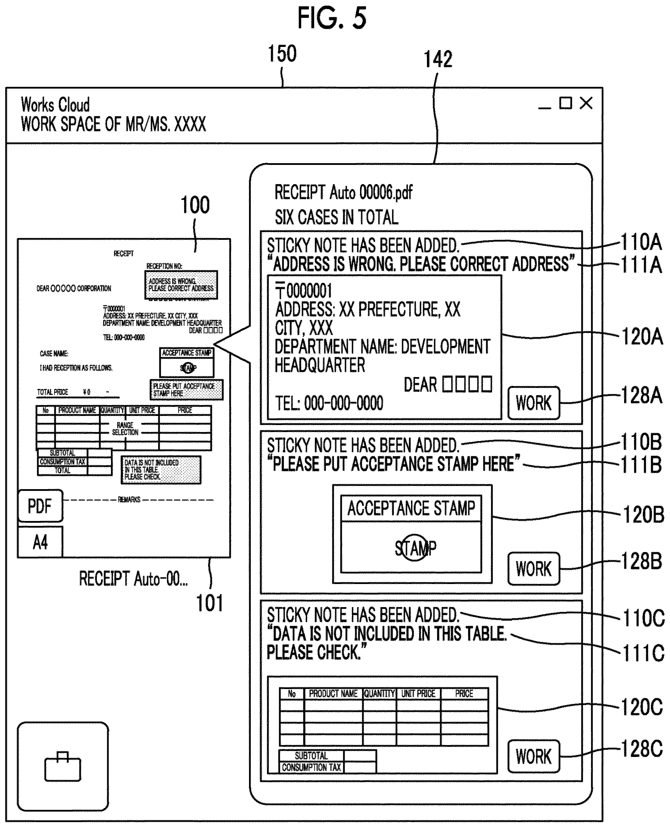

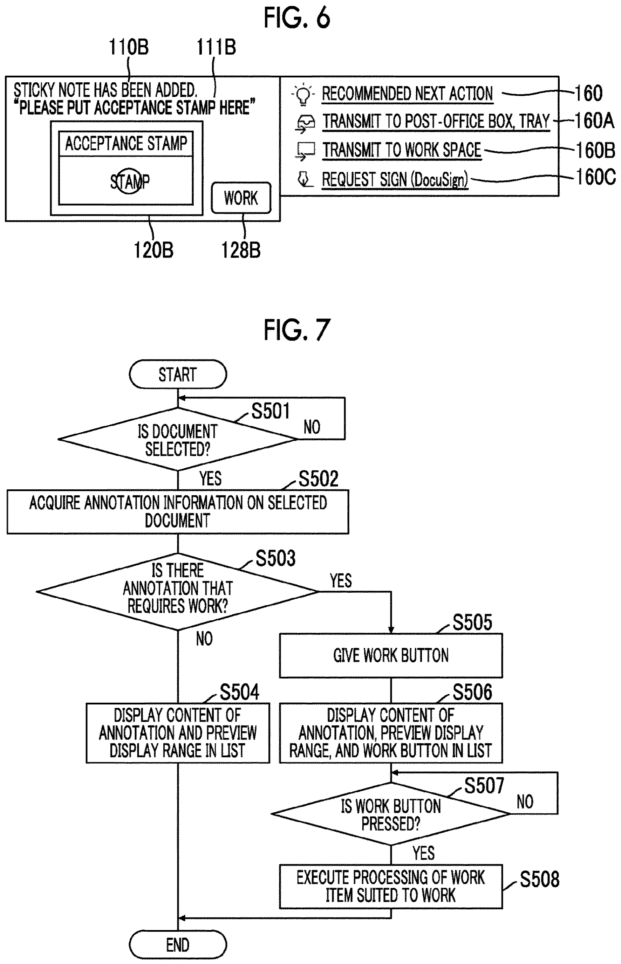

In addition, in the user terminal 10, by designating the document 100 displayed on the display unit 16, a list screen of the annotation 111 and the preview display range 120 corresponding to the annotation 111 is displayed without opening the document 100 (see Fig. 5). For a list screen 142 of the annotation 111 and the preview display range 120 corresponding to the annotation 111, the description thereof will be made below. In addition, in the user terminal 10, required work can be performed by pressing a work button 128 displayed in the preview display range 120 for the annotation 111 of the document 100 received from another user (see Fig. 6).

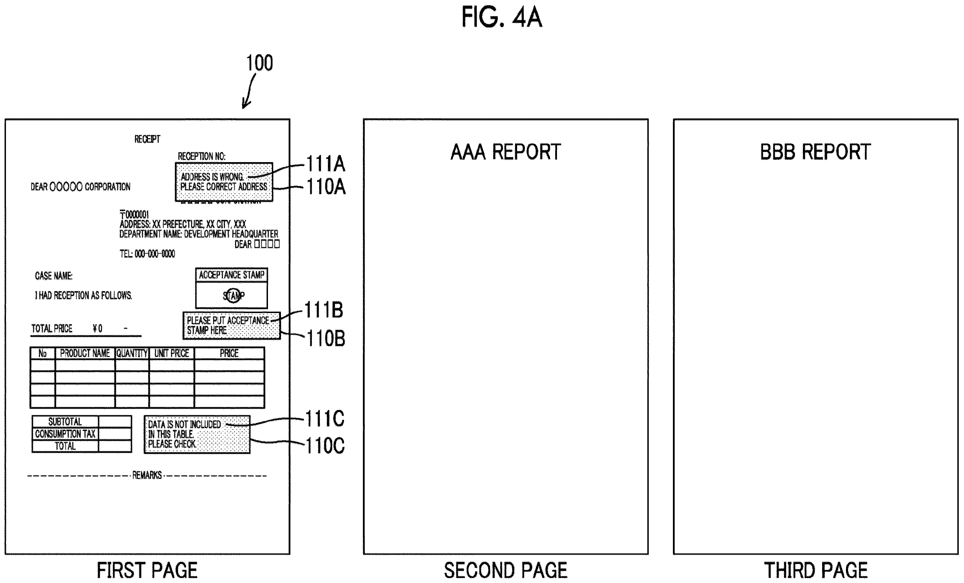

The server 20 is configured by a computer device. The server 20 has a function of transmitting the document 100 (see Fig. 4A) received from one user terminal 10 to the other user terminals 10. In addition, the server 20 may have a function of sharing the document 100 (see Fig. 4A) among the plurality of user terminals 10.

Fig. 2 is a block diagram showing a hardware configuration of the user terminal 10.

As shown in Fig. 2, the user terminal 10 has each configuration of a central processing unit (CPU) 11, a read only memory (ROM) 12, a random access memory (RAM) 13, a storage 14, the input unit 15, the display unit 16, and a communication interface 17. The configurations are connected to each other via a bus 19 in a communicable manner.

The CPU 11 is a central arithmetic processing unit, and executes various programs or controls each unit. The CPU 11 is an example of a processor. That is, the CPU 11 reads out a program from the ROM 12 or the storage 14, and executes the program using the RAM 13 as a work area. The CPU 11 controls each configuration and performs various types of arithmetic processing according to the program recorded in the ROM 12 or the storage 14. In the present exemplary embodiment, an information processing program is stored in the ROM 12 or the storage 14.

The ROM 12 stores various programs and various data. The RAM 13 transitorily stores the program or the data, as the work area. The storage 14 is configured by a hard disk drive (HDD) or a solid state drive (SSD), and stores various programs including an operating system and various data. The RAM 13 or the storage 14 functions as an information storage unit 48 described below.

The display unit 16 is, for example, a liquid crystal display, and displays various types of information. The display unit 16 is an example of a display screen. The input unit 15 is used for performing various inputs. The input unit 15 has a configuration in which a pointing device, such as a mouse, and a keyboard are included. It should be noted that the input unit 15 may be a touch panel system instead of these configurations.

The communication interface 17 is an interface for communicating with another device, such as the other user terminal 10, and uses standards, such as Ethernet (registered trademark), FDDI, and Wi-Fi (registered trademark).

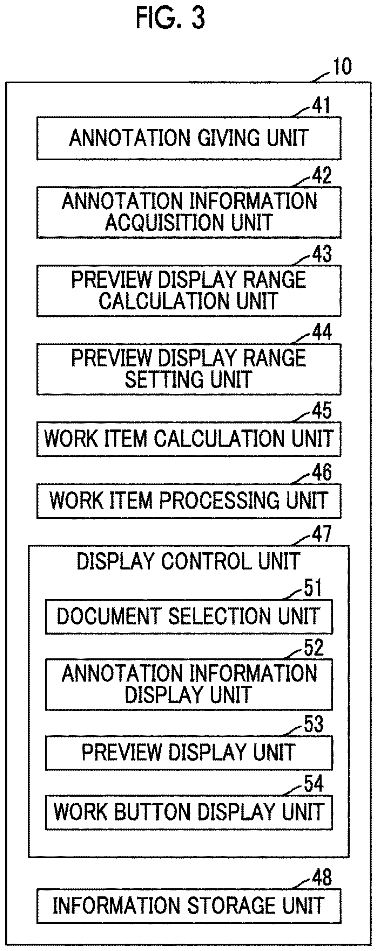

Fig. 3 is a block diagram showing an example of a functional configuration of the user terminal 10.

As shown in Fig. 3, the user terminal 10 includes, as functional configurations, an annotation giving unit 41, an annotation information acquisition unit 42, a preview display range calculation unit 43, a preview display range setting unit 44, a work item calculation unit 45, a work item processing unit 46, a display control unit 47, and the information storage unit 48. Further, the display control unit 47 includes a document selection unit 51, an annotation information display unit 52, a preview display unit 53, and a work button display unit 54. Each functional configuration is realized by the CPU 11 reading out the information processing program stored in the ROM 12 or the storage 14, loading the information processing program into the RAM 13, and executing the information processing program.

The annotation giving unit 41 has a function of giving the annotation 111 to the document 100. As an example, as shown in Fig. 4A, the document 100 is composed of a plurality of pages. As an example, a plurality of sticky notes 110 (for example, sticky notes 110A, 110B, and 110C) are given to a first page of the document 100, and the annotations 111 (for example, annotations 111A, 111B, and 111C) are described in the sticky notes 110, respectively.

As shown in Fig. 4B, the sticky notes 110 (for example, the sticky note 110A, 110B, and 110C) are given to the body of the document 100 displayed on the display unit 16, and the annotations 111 (for example, the annotations 111A, 111B, and 111C) are input to the sticky notes 110, respectively. The sticky note 110 and the annotation 111 are input by the input unit 15. As an example, in the document 100, when the sticky note 110 is given, an editing screen 130 of the sticky note is displayed, and the annotation 111 can be given by inputting a text to the editing screen 130. As a result, the annotation 111 is given to the document 100. It should be noted that, in a case in which it is not required to distinguish the respective sticky notes 110A, 110B, and 110C, and the respective annotations 111A, 111B, and 111C, the description will be made as the sticky note 110 and the annotation 111.

The annotation information acquisition unit 42 has a function of acquiring annotation information given to the document 100. As an example, the annotation information acquisition unit 42 acquires information on the annotation 111 in the sticky note 110 given to the document 100 (see Fig. 4A). As an example, the annotation information acquisition unit 42 acquires the annotation information from annotation data to be described below stored in the information storage unit 48.

The preview display range calculation unit 43 has a function of calculating the preview display range 120 as the part of the content of the document 100 corresponding to the content of the annotation 111. As an example, the preview display range calculation unit 43 calculates the preview display range 120 by executing an analysis of the content of the information described in a vicinity of a position to which the annotation 111 is given in the document 100 (see Fig. 4B). Here, the vicinity of the position refers to a part surrounding the position to which the annotation 111 is given. For example, the vicinity of the position may be set in advance in an area within 10 lines or within 70 mm above and below the position to which the annotation 111 is given, including the position, or may be set to be changed according to a paragraph of a sentence or a size of an image described in the document 100. The preview display range calculation unit 43 calculates the preview display range 120 by using a preview display range calculation parameter (inference model). The preview display range calculation parameter (inference model) is stored in the storage 14.

For example, as shown in Fig. 4B, the content of the information described in the vicinity of the position to which the annotation 111B is given is an image 127, and the preview display range calculation unit 43 calculates a preview display range 120B such that at least a part of the image 127 is included. In addition, for example, the content of the information described in the vicinity of the position to which the annotation 111C is given is a table 129 as an example of the image, and the preview display range calculation unit 43 calculates a preview display range 120C such that at least a part of the table 129 is included.

For example, as shown in Fig. 4B, the content of the information described in the vicinity of the position to which the annotation 111A is given includes text information 125 described in the document 100, and the preview display range calculation unit 43 executes the analysis of the content of the information by a natural language analysis, and calculates a preview display range 120A such that the text information 125 includes a specific meaning content. Examples of the specific meaning content include a content corresponding to a keyword in the annotation 111. For example, the preview display range calculation unit 43 calculates the preview display range 120A such that an address that is the specific meaning content of the text information 125 in the document 100 corresponding to the annotation 111A is included.

Here, the natural language analysis refers to that the content of the information is subjected to natural language processing (NLP), words (natural languages) that are usually used by humans for communication are used as targets, and an analysis of the meaning of the words is executed. The natural language processing is the series of technology of causing a computer to process the natural languages that are used by the humans on a daily basis, and is technology of analyzing a large amount of text data by an artificial intelligence (AI).

In addition, the preview display range calculation unit 43 may set the preview display range 120 to be displayed, to differ according to an attribute of the annotation 111. The attribute of the annotation 111 refers to a property or a feature commonly provided in the annotation 111. Examples of the attribute of the annotation 111 include a type of the sticky note 110, a color of the sticky note 110, and a color of a text of the annotation 111. For example, in a case in which the color of the sticky note 110 is set to a different color according to the attribute of the annotation 111, the preview display range 120 may be set to differ according to the color of the sticky note 110.

The preview display range setting unit 44 has a function of setting (that is, specifying) the preview display range 120 as the part of the content of the document 100 corresponding to the content of the annotation 111. As an example, the preview display range setting unit 44 sets the preview display range 120 to be displayed together with the annotation 111, in association with the annotation 111.

As shown in Fig. 4B, for example, the preview display range setting unit 44 sets the range calculated by the preview display range calculation unit 43 as the preview display range 120.

In addition, for example, the preview display range setting unit 44 may set (that is, specify) the preview display range 120 based on a selection operation of the part of the content of the document 100 by the user who has given the annotation 111 to the document 100.

In addition, for example, the preview display range setting unit 44 may receive a change of the preview display range 120 by the user who has given the annotation 111 for the preview display range 120 calculated based on the content of the annotation 111 given to the document 100. For example, the preview display range 120 may be changeable by the user moving a cursor 140 to select the range (that is, enlarge or reduce a designated range).

The work item calculation unit 45 has a function of calculating a recommendation work item when work information that requires work on the document 100 is acquired from the content of the annotation 111. For example, as shown in Fig. 6, an action item 160 is calculated as an example of the recommendation work item suited to the work. The work item calculation unit 45 calculates the recommendation work item by using a work item calculation parameter (inference model). The work item calculation parameter (inference model) is stored in the storage 14.

The work item processing unit 46 has a function of performing processing of a work item according to the recommendation work item calculated by the work item calculation unit 45. For example, the work item processing unit 46 performs the processing of the work item according to the recommendation work item selected by the user from among a plurality of recommendation work items. For example, as shown in Fig. 6, in a case in which any one of the action items 160 is selected, a related tool or a plug-in suited to the work is opened, and the processing of the work item is executed. Here, the plug-in is a so-called extension function, and is a type of a program module that can be added to extend a function of application software.

The display control unit 47 has a function of controlling the display screen displayed on the display unit 16. The document selection unit 51 has a function of selecting the document. For example, the document selection unit 51 receives the selection of the document 100 by the input from the input unit 15 by the user. For example, as shown in Fig. 5, in a case in which the reduction image 101 is selected when a reduction image 101 representing information on the document 100 is displayed on the display unit 16, the document selection unit 51 receives the selection of the document 100.

The annotation information display unit 52 has a function of displaying the information on the annotation 111 on the display unit 16. As an example, as shown in Fig. 5, the annotation information display unit 52 displays information indicating the addition of the sticky note 110 and the information on the annotation 111 on the list screen 142 on the display unit 16.

The preview display unit 53 has a function of displaying the preview display range 120 set by the preview display range setting unit 44. As shown in Fig. 5, the annotation information display unit 52 and the preview display unit 53 display, on the list screen 142, the annotation 111 given to the document 100 together with the preview display range 120. In the first exemplary embodiment, in a case in which the reduction image 101 representing the information on the document 100 displayed on the display unit 16 is selected, the annotation information display unit 52 and the preview display unit 53 displays the annotation 111 and the preview display range 120 on the list screen 142 in association with the reduction image 101 without opening the document 100.

In the first exemplary embodiment, when the plurality of annotations 111A, 111B, and 111C are given to the document 100, the annotation information display unit 52 and the preview display unit 53 display the preview display ranges 120A, 120B, and 120C corresponding to the annotation 111 together with the plurality of annotations 111A, 111B, and 111C in a list on the list screen 142. In addition, in a case in which one of the preview display ranges 120A, 120B, and 120C is selected, the display may jump to a target location of the document 100, and the target location of the document 100, that is, the selected one of the preview display ranges 120A, 120B, and 120C may be displayed on the display unit 16.

The work button display unit 54 has a function of displaying the work button 128 on the display unit 16 in a case in which the recommendation work item is calculated by the work item calculation unit 45. As an example, as shown in Fig. 5, the work button display unit 54 displays the work buttons 128 (for example, work buttons 128A, 128B, and 128C) next to the preview display range 120 displayed together with the annotation 111.

As an example, when the work button 128 (for example, any one of the work buttons 128A, 128B, or 128C) is pressed, the display control unit 47 displays the recommendation work item calculated by the work item calculation unit 45. In addition, the display control unit 47 may transition to a selection screen of the recommendation work item and a work processing screen. The work item processing unit 46 performs the processing of the work item according to the recommendation work item selected by the user.

The information storage unit 48 stores the content of the annotation 111 given to the document 100 and the preview display range 120, as the annotation data. In addition, in a case in which the recommendation work item is calculated by the work item calculation unit 45, the recommendation work item and the work button 128 are stored as the annotation data together with the content of the annotation 111 and the preview display range 120.

Hereinafter, an action of the user terminal 10 according to the first exemplary embodiment will be described.

Fig. 7 is a flowchart showing a flow of information processing for which the user terminal 10 according to the first exemplary embodiment is responsible. In the user terminal 10, the CPU 11 reads out the information processing program from the ROM 12 or the storage 14, loads the information processing program into the RAM 13, and executes the information processing.

The CPU 11 determines whether or not the document is selected (step S501). For example, as shown in Fig. 5, in a case in which the reduction image 101 (reduction image 101 representing the information on the document 100) displayed on the display screen 150 of the display unit 16 is right-clicked, the CPU 11 determines that the document 100 is selected. In a case in which the document is not selected (step S501: NO), the CPU 11 waits until the document is selected.

In a case in which the document is selected (step S501: YES), the CPU 11 acquires the annotation information on the selected document (step S502). For example, in a case in which the document 100 is selected, the CPU 11 acquires the information on the annotation 111 of the selected document 100. For example, as shown in Fig. 4A, the information on the annotations 111A, 111B, and 111C of the selected document 100 is acquired.

The CPU 11 determines whether or not there is an annotation that requires the work (step S503). For example, the CPU 11 acquires the work information that requires the work on the document 100 from the content of the annotation 111 given to the document 100, and calculates the recommendation work item.

In a case in which there is no annotation that requires the work (step S503: NO), the CPU 11 displays the content of the annotation and the preview display range in a list (step S504). In the first exemplary embodiment, the CPU 11 displays the list screen 142 of the content of the annotation 111 and the preview display range 120 in association with the reduction image 101 without opening the document 100. The preview display range 120 is a range set by the preview display range setting unit 44 as the part of the content of the document 100 corresponding to the content of the annotation 111.

In a case in which there is the annotation that requires the work (step S503: YES), the CPU 11 gives the work button to the annotation that requires the work (step S505). For example, the CPU 11 gives the work buttons 128 (for example, the work buttons 128A, 128B, and 128C) to the annotations 111 (for example, the annotations 111A, 111B, and 111C) that require the work (see Fig. 5).

The CPU 11 displays the content of the annotation, the preview display range, and the work button in a list (step S506). For example, as shown in Fig. 5, the CPU 11 displays the content of the annotations 111 (for example, the annotations 11 1A, 111B, and 111C), the preview display ranges 120 (for example, the preview display ranges 120A, 120B, and 120C), and the work buttons 128 (for example, the work buttons 128A, 128B, and 128C) in a list on the list screen 142.

The CPU 11 determines whether or not the work button is pressed (step S507). For example, in a case in which the user presses the work button 128B corresponding to the annotation 111B, the CPU 11 determines that the work button 128B is pressed (see Fig. 5). In a case in which the work button is not pressed (step S507: NO), the CPU 11 waits until the work button is pressed.

In a case in which the work button is pressed (step S507: YES), the CPU 11 executes the processing of the work item suited to the work (step S508). For example, as shown in Fig. 6, the CPU 11 displays the action item 160 as an example of the recommendation work item on the display unit 16, and executes the processing of the work item according to the action item 160 selected by the user. The action item 160 is an example of a work instruction item for transitioning from the preview display range 120B to the work processing screen. For example, when any one of action items 160A, 160B, or 160C is selected by the user, the related tool or the plug-in suited to the work related to the annotation 111B is opened, and the processing of the required work item is executed.

For example, in a case in which the user presses the work button 128B corresponding to the annotation 111B, the user can perform the work suited to the content of the annotation 111B (for example, work of pressing an acceptance stamp at a determined position of the document 100). In addition, for example, in a case in which the user presses the work button 128A corresponding to the annotation 111A, the user can perform the work suited to the content of the annotation 111A (for example, work of correcting the address described in the document 100). As a result, the processing based on the information processing program for which the user terminal 10 is responsible is terminated.

As described above, in the user terminal 10, the CPU 11 displays the annotation 111 given to the document 100 on the display unit 16 together with the preview display range 120 set (that is, specified) as the part of the content of the document 100 corresponding to the content of the annotation 111 (see Fig. 5). For this reason, in the user terminal 10, as compared to a configuration in which a part of a document is uniformly displayed together with an annotation given to the document regardless of a content of the annotation in a case in which the annotation is displayed together with the part of the document, it is possible to display the preview display range 120 that is the part of the content of the document 100 related to the content of the annotation 111.

In addition, in the user terminal 10, the reduction image 101 representing the information on the document 100 is displayed on the display unit 16 (see Fig. 5). In a case in which the reduction image 101 displayed on the display unit 16 is selected, the CPU 11 displays the annotation 111 and the preview display range 120 in association with the reduction image 101 without opening the document 100. For this reason, in the user terminal 10, as compared to a case in which the preview display range as the partial information is displayed when the annotation is selected in a state in which the document is opened, it is possible to quickly check the location of the annotation 111 given to the document 100 and the preview display range 120 related to the content of the annotation 111. That is, it is possible to quickly check where in the document 100 the annotation 111 is given.

In addition, in the user terminal 10, when the plurality of annotations 111 are given to the document 100, the CPU 11 displays the plurality of annotations 111 and the preview display ranges 120 corresponding to the annotations 111 in a list on the display unit 16. For this reason, in the user terminal 10, as compared to a case in which the preview display range as the partial information related to the content of the annotation is displayed when the annotation displayed on the display unit is selected, it is possible to quickly check the annotation 111 and the preview display range 120.

In addition, in the user terminal 10, when the work information that requires the work for the document 100 is acquired from the content of the annotation 111, the CPU 11 displays the action item 160 as an example of the work instruction item for transitioning from the preview display range 120 to the work processing screen on the display unit 16 (see Fig. 6). For this reason, in the user terminal 10, as compared to a case in which the work is performed by opening the document and moving to the location of the annotation in the document, it is possible to quickly perform the work processing on the annotation 111.

In addition, in the user terminal 10, the CPU 11 sets (that is, specifies) the preview display range 120 by executing the analysis of the content of the information described in the vicinity of the position to which the annotation 111 is given in the document 100. For this reason, in the user terminal 10, as compared to a case in which only the preview display range as the partial information designated by the user is displayed, it is possible to quickly display the preview display range 120.

In addition, in the user terminal 10, the preview display range 120 differs according to the attribute of the annotation 111. For this reason, in the user terminal 10, as compared to a case in which the preview display range as the partial information is displayed only by the text information, it is easy to check the preview display range 120 related to the annotation 111.

In addition, in the user terminal 10, the contents of the information described in the vicinity of the positions to which the annotations 111B and 111C are given are the images 127 and the tables 129 described in the document 100 (see Fig. 4B). The CPU 11 sets (that is, specifies) the preview display ranges 120B and 120C such that at least a part of the image 127 or the table 129 is included. For this reason, in the user terminal 10, as compared to a case in which the text information is displayed as the preview display range as the partial information without any changes, it is easy to check the preview display range 120 related to the annotation 111.

In addition, in the user terminal 10, the content of the information described in the vicinity of the position to which the annotation 111A is given includes the text information 125 described in the document 100. The CPU 11 executes the analysis of the content of the information by the natural language analysis, and sets (that is, specifies) the preview display range 120A such that the text information 125 includes the specific meaning content. For this reason, in the user terminal 10, as compared to a case in which the text information is displayed as the preview display range as the partial information without any changes, it is easy to check the preview display range 120A related to the annotation 111A.

In addition, in the information processing program, the processing of displaying the annotation 111 given to the document 100 on the display unit 16 together with the preview display range 120 set as the part of the content of the document 100 corresponding to the content of the annotation 111 on the user terminal 10 is executed. For this reason, in the information processing program, as compared to a configuration in which a part of a document is uniformly displayed together with an annotation given to the document regardless of a content of the annotation in a case in which the annotation is displayed together with the part of the document, it is possible to display the preview display range 120 that is the part of the content of the document 100 related to the content of the annotation 111.

### [Second Exemplary Embodiment]

Hereinafter, a user terminal according to a second exemplary embodiment will be described. It should be noted that the identical reference numerals are assigned to the identical configuration parts to the first exemplary embodiment described above, and the description thereof will be omitted as appropriate.

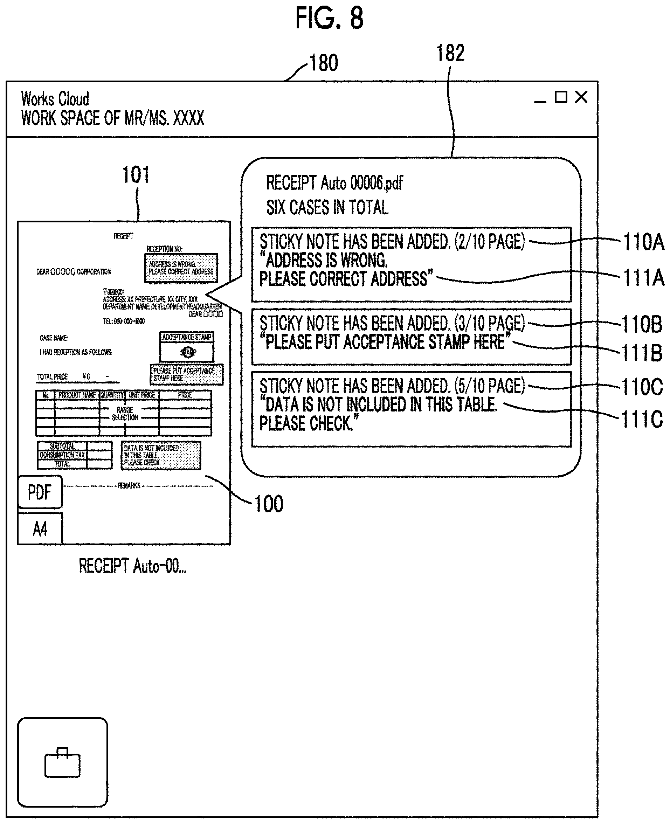

A difference of the user terminal 10 according to the second exemplary embodiment from the user terminal 10 according to the first exemplary embodiment is a method of displaying the plurality of annotations 111 and the preview display range 120 that is the part of the content of the document 100 corresponding to the content of each of the annotations 111. As shown in Fig. 8, when the plurality of annotations 111 are given to the document 100, the CPU 11 of the user terminal 10 displays the plurality of annotations 111 in a list on a list display screen 182 in the display screen 180 of the display unit 16.

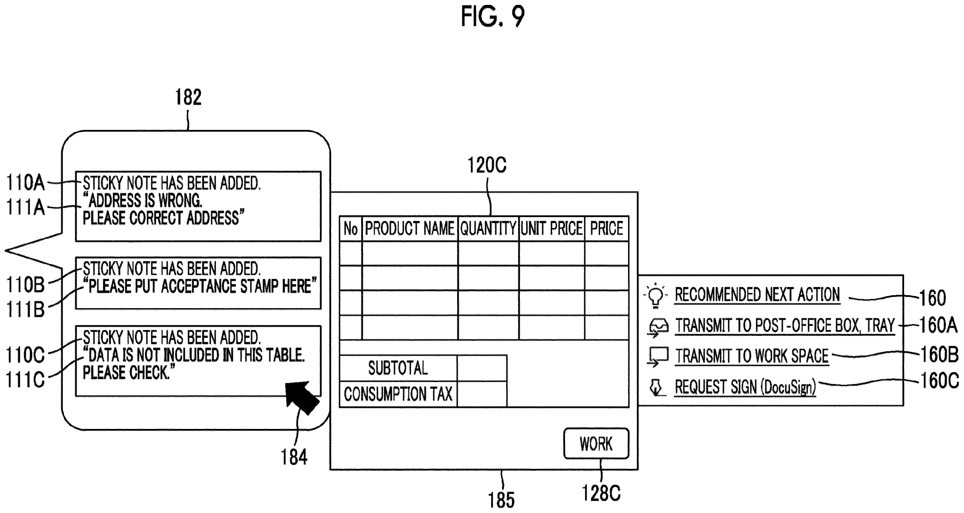

As shown in Fig. 9, when the annotation 111C, which is one of the plurality of annotations 111 displayed on the list display screen 182, is selected, the CPU 11 displays a screen 185 of the preview display range 120C corresponding to the annotation 111C on the display screen 180. For example, in a case in which the annotation 111C is hovered, the screen 185 of the preview display range 120C at the location corresponding to the annotation 111C in the document 100 is displayed. Here, hovering refers to that, in a case in which the cursor 184 is superimposed on a target object (for example, the annotation 111C), some processing is automatically performed.

Further, when the work button 128C displayed on the screen 185 of the preview display range 120C is pressed, the CPU 11 displays the action items 160 (for example, the action items 160A, 160B, and 160C) on the display unit 16. The action item 160 is an example of a work instruction item for transitioning from the preview display range 120C to the work processing screen. When any one of the action items 160A, 160B, or 160C is selected by the user, the processing of the selected work item is executed. It should be noted that other configurations of the user terminal 10 according to the second exemplary embodiment are identical to the configurations of the user terminal 10 according to the first exemplary embodiment.

In the user terminal 10 according to the second exemplary embodiment, the following effects can be obtained in addition to the effects of the identical configuration to the user terminals 10 according to the first exemplary embodiment.

In the user terminal 10 according to the second exemplary embodiment, when the annotations 111 are given to the document 100, the CPU 11 displays the plurality of annotations 111 in a list on the list display screen 182 of the display unit 16. Further, when one of the plurality of annotations 111 displayed on the list display screen 182 is selected, the CPU 11 displays a screen 185 of the preview display range 120 corresponding to the selected annotation 111 on the display screen 180. For this reason, in the user terminal 10, as compared to a case in which the annotation and the preview display range as the partial information are displayed in a list on the display screen, it is possible to secure a space for displaying a large number of the annotations 111.

### [Third Exemplary Embodiment]

Hereinafter, a user terminal according to a third exemplary embodiment will be described. It should be noted that the identical reference numerals are assigned to the identical configuration parts to the first and second exemplary embodiments described above, and the description thereof will be omitted as appropriate.

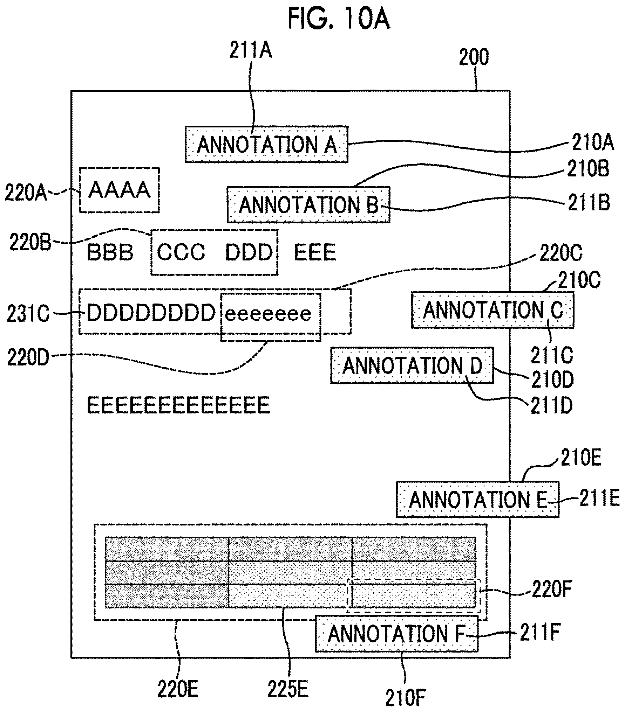

Fig. 10A shows an example of a document 200 displayed on the display unit 16 of the user terminal 10. As shown in Fig. 10A, a plurality of sticky notes 210 (for example, sticky notes 210A, 210B, 210C, 210D, 210E, and 210F) are given to the document 200, and annotations 211 (for example, annotations 211A, 211B, 211C, 211D, 211E, and 211F) are described in the sticky notes 210, respectively. The annotation 211 is an example of an annotation.

Preview display ranges 220 (for example, preview display ranges 220A, 220B, 220C, 220D, 220E, and 220F) that are the parts of the content of the document 200 are set in the annotations 211, respectively. The preview display range 220 is an example of partial information.

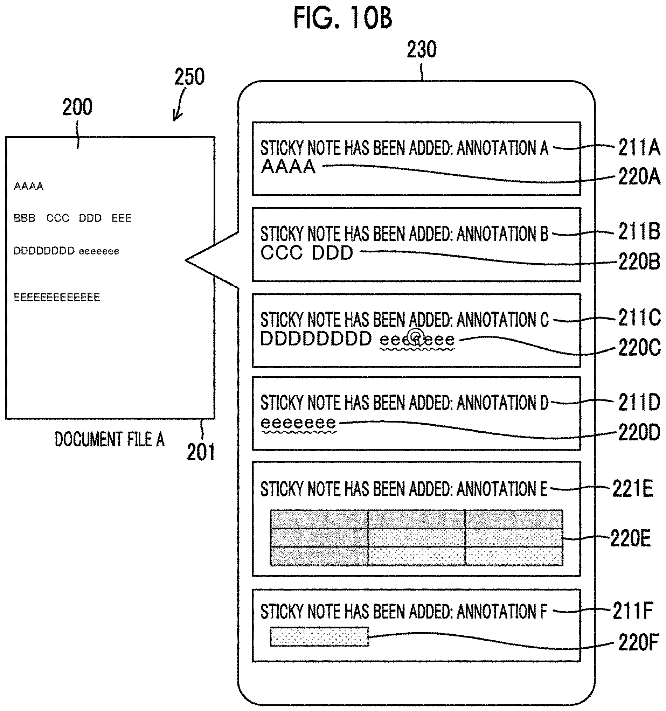

Fig. 10B shows a display screen 250 displayed on the display unit 16 of the user terminal 10. A reduction image 201 representing the information on the document 200 is displayed on the display screen 250. As shown in Fig. 10B, in a case in which the reduction image 201 displayed on the display screen 250 is selected, the annotation 211 and the preview display range 220 are displayed on the list screen 230 in association with the reduction image 201 without opening the document 200.

Here, setting processing of the preview display range 220 corresponding to the content of the annotation 211 given to the document 200 will be described.

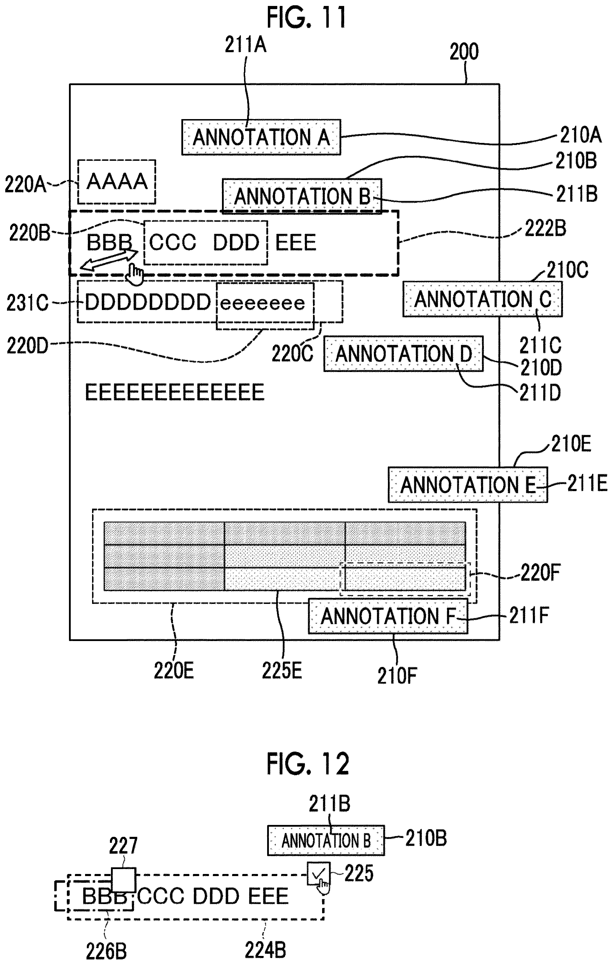

As shown in Fig. 11, in a state in which the document 200 is displayed on the display unit 16, the user gives the sticky note 210 to the document 200, and inputs the annotation 211. In the user terminal 10, the CPU 11 sets (that is, specifies) the preview display range 220 by executing the analysis of the content of the information described in the vicinity of the position to which the annotation 211 is given in the document 200.

In addition, in the user terminal 10, a range set as the preview display range 220 differs according to the attribute of the annotation 211. For example, in a case in which the sticky note 210 is set to a different color according to the attribute of the sticky note 210, the range set as the preview display range 220 differs according to the color of the selected sticky note 210.

In addition, the content of the information described in the vicinity of the position to which the annotation 211 is given is a table 225E as an example of the image described in the document 200 (see Fig. 10A). The CPU 11 specifies the preview display range 220E such that at least a part of the table 225E is included, by executing the analysis of the content of the information. In order to determine that the content is the table, existing technology, such as an image analysis, need only be used.

In addition, the content of the information described in the vicinity of the position to which the annotation 211C is given includes text information 231C described in the document 200. The CPU 11 executes the analysis of the content of the information by the natural language analysis, and sets (that is, specifies) the preview display range 220C such that the text information 231C includes the specific meaning content.

The CPU 11 of the user terminal 10 receives a change of the preview display range 220 by an operation of the user who has given the annotation 211. For example, as shown in Fig. 11, by selecting and enlarging a frame of the preview display range 220B by a manual operation of the user, a change to a preview display range 222B larger than the preview display range 220B is performed.

The CPU 11 of the user terminal 10 sets (that is, specifies) the preview display range 222B based on the selection operation of the part of the content of the document 200 by the user who has given the annotation 211. As described above, in a case in which the change to the preview display range 222B is performed by the selection operation of the part of the content of the document 200 by the user, the changed preview display range 222B is set.

In addition, as shown in Fig. 12, when the change of the preview display range 220 is received from the user who has given the annotation 211, the CPU 11 of the user terminal 10 may present preview display ranges 224B and 226B that are a plurality of (for example, two) candidates according to the content of the annotation 211B. When any one of the preview display ranges 224B or 226B that are the plurality of candidates is selected by the user, the selected preview display range 224B is set. As an example, selection boxes 225 and 227 are displayed in the preview display ranges 224B and 226B that are the plurality of candidates, respectively. For example, in a case in which the selection box 225 is checked by the user, the CPU 11 receives the selection by the user, and sets the selected preview display range 224B. It should be noted that other configurations of the user terminal 10 according to the third exemplary embodiment are identical to the configurations of the user terminal 10 according to the first exemplary embodiment.

Hereinafter, an action of the user terminal 10 according to the third exemplary embodiment will be described.

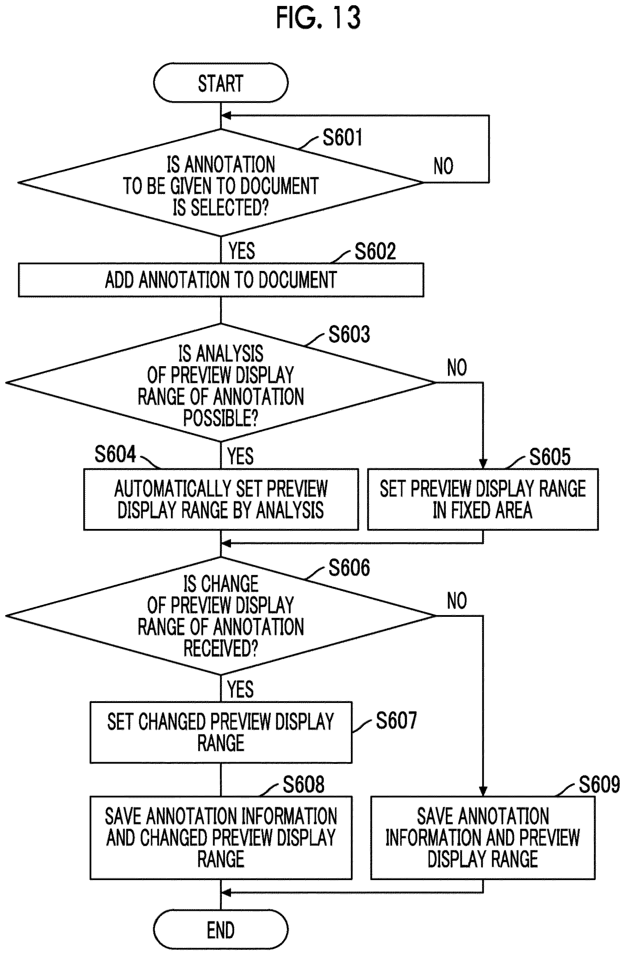

Fig. 13 is a flowchart showing a flow of information processing for which the user terminal 10 according to the third exemplary embodiment is responsible. In the user terminal 10, the CPU 11 reads out the information processing program from the ROM 12 or the storage 14, loads the information processing program into the RAM 13, and executes the information processing (see Fig. 2).

The CPU 11 determines whether or not the annotation to be given to the document is selected (step S601). For example, in a case in which the sticky note 210 is given to the document 200 and the annotation 211 is input to an input area of the sticky note 210, the CPU 11 determines that the annotation to be given to the document is selected.

In a case in which the annotation to be given to the document is not selected (step S601: NO), the CPU 11 waits until the annotation to be given to the document is selected.

In a case in which the annotation to be given to the document is selected (step S601: YES), the CPU 11 adds the annotation to the document (step S602). For example, by saving the annotation 211 input to the sticky note 210, the annotation 211 is added to the document 200.

The CPU 11 determines whether or not the analysis of the preview display range of the annotation is possible (step S603). For example, as shown in Fig. 10A, in a case in which the analysis of the content of the information described in the vicinity of the position to which the annotation 211 is given in the document 200 can be executed, the CPU 11 determines that the analysis of the preview display range 220 of the annotation 211 is possible.

In a case in which the analysis of the preview display range of the annotation is possible (step S603: YES), the CPU 11 automatically sets the preview display range of the annotation by the analysis (step S604). As shown in Fig. 10A, the CPU 11 automatically sets the preview display range 220 by executing the analysis of the content of the information described in the vicinity of the position to which the annotation 211 is given in the document 200.

For example, as shown in Fig. 10A, the content of the information described in the vicinity of the position to which the annotation 211E is given is the table 225E described in the document 200, and the CPU 11 sets (that is, specifies) the preview display range 220E such that at least the part of the table 225E is included, by executing the analysis of the content of the information.

In addition, for example, as shown in Fig. 10A, the content of the information described in the vicinity of the position to which the annotation 211C is given includes the text information 231C described in the document 200, and the CPU 11 executes the analysis of the content of the information by the natural language analysis, and sets (that is, specifies) the preview display range 220C such that the text information 231C includes the specific meaning content.

In a case in which the analysis of the preview display range of the annotation is not possible (step S603: NO), the CPU 11 sets the preview display range 220 in a fixed area in the document (step S605). For example, in a case in which the analysis of the content of the information described in the vicinity of the position to which the annotation 211 is given is not possible, the CPU 11 sets the preview display range 220 in a fixed area that is determined in advance in the document 200.

The CPU 11 determines whether or not the change of the preview display range of the annotation is received (step S606). For example, as shown in Fig. 11, in a case in which the user manually enlarges the preview display range 220B of the annotation 211B and changes the preview display range 220B to the preview display range 222B, the CPU 11 receives the change of the preview display range 222B of the annotation 211B.

In addition, instead of the above configuration, as shown in Fig. 12, the CPU 11 may display the preview display ranges 224B and 226B that are the plurality of (for example, two) candidates when the user designates the change of the preview display range 220B of the annotation 211B, and the CPU 11 may receive the change of the preview display range 224B of the annotation 211B when the user designates the preview display range 224B.

In a case in which the change of the preview display range of the annotation is received (step S606: YES), the CPU 11 sets the changed preview display range (step S607). For example, as shown in Fig. 11, in a case in which the preview display range 220B of the annotation 211B is changed manually by the user, the CPU 11 sets the changed preview display range 222B.

In addition, instead of the above configuration, as shown in Fig. 12, in a case in which the user designates the preview display range 224B among the preview display ranges 224B and 226B that are the plurality of (for example, two) candidates, the CPU 11 may set the changed preview display range 224B.

The CPU 11 saves the information on the annotation and the changed preview display range (step S608). For example, as shown in Fig. 11, in a case in which the preview display range 220B of the annotation 111B is changed to the preview display range 222B manually by the user, the CPU 11 saves the information on the annotation 111B and the changed preview display range 222B.

In addition, instead of the above configuration, as shown in Fig. 12, in a case in which the user designates the preview display range 224B among the preview display ranges 224B and 226B that are the plurality of (for example, two) candidates, the CPU 11 may save the information on the annotation 111B and the changed preview display range 224B.

In a case in which the change of the preview display range of the annotation is not received (step S606: NO), the CPU 11 saves the information on the annotation and the set preview display range (step S609). For example, as shown in Fig. 10A, in a case in which the preview display range 220E is automatically set by the analysis, the CPU 11 saves the information on the annotation 211E and the preview display range 220E. In addition, for example, in a case in which the preview display range 220 is set in a fixed area in the document 200, the CPU 11 saves the information on the annotation 211 and the preview display range 220 set in the fixed area. As a result, the processing based on the information processing program for which the user terminal 10 according to the third exemplary embodiment is responsible is terminated.

As described above, in the user terminal 10 according to the third exemplary embodiment, the CPU 11 sets (that is, specifies) the preview display range 220 by executing the analysis of the content of the information described in the vicinity of the position to which the annotation 211 is given in the document 200. For this reason, in the user terminal 10, as compared to a case in which only the preview display range as the partial information designated by the user is displayed, it is possible to quickly display the preview display range 220.

In addition, in the user terminal 10, the range set as the preview display range 220 differs according to the attribute of the annotation 211. For this reason, in the user terminal 10, as compared to a case in which the preview display range as the partial information is displayed only by the text information, it is easy to check the preview display range 220 related to the annotation 211.

In addition, in the user terminal 10, the content of the information described in the vicinity of the position to which the annotation 211 is given is a table 225E as an example of the image described in the document 200 (see Fig. 10A). The CPU 11 specifies the preview display range 220E such that at least the part of the table 225E is included, by executing the analysis of the content of the information. For this reason, in the user terminal 10, as compared to a case in which the text information is displayed as the preview display range as the partial information without any changes, it is easy to check the preview display range 220E related to the annotation 211E.

In addition, in the user terminal 10, the content of the information described in the vicinity of the position to which the annotation 211C is given includes text information 231C described in the document 200. The CPU 11 executes the analysis of the content of the information by the natural language analysis, and sets (that is, specifies) the preview display range 220C such that the text information 231C includes the specific meaning content. For this reason, in the user terminal 10, as compared to a case in which the text information is displayed as the preview display range as the partial information without any changes, it is easy to check the preview display range 220C related to the annotation 211C.

In addition, in the user terminal 10, the CPU 11 sets (that is, specifies) the preview display range 220 based on the selection operation of the part of the content of the document 200 by the user who has given the annotation 211. For this reason, in the user terminal 10, as compared to a case in which the preview display range as the partial information corresponding to the annotation is uniformly set, it is easy to reflect the intention of the user who has given the annotation 211. In other words, it is possible to display the preview display range 220 that reflects the intention of the user who has given the annotation 211.

In addition, in the user terminal 10, the CPU 11 receives the change of the preview display range 222B by the user who has given the annotation 211B for the preview display range 220B specified based on the content of the annotation 211B (see Fig. 11). For this reason, in the user terminal 10, as compared to a case in which the preview display range as the partial information cannot be changed, it is easy to reflect the intention of the user who has given the annotation 211B. In other words, it is possible to display the preview display range 222B that reflects the intention of the user who has given the annotation 211B.

In addition, in the user terminal 10, when the change of the preview display range 220B is received from a person who has given the annotation 211B, the CPU 11 may present the preview display ranges 224B and 226B that are the plurality of candidates according to the content of the annotation 211B (see Fig. 12). For this reason, in the user terminal 10, as compared to a case in which the preview display range as the partial information is designated only manually by the user, it is easy to change the preview display range 220B.

### [Others]

In the first and second exemplary embodiments described above, as shown in Fig. 4B, the preview display range 120B may be changeable by moving the cursor 140 to the preview display range 120B and enlarging or reducing the preview display range 120B in the document 100. In addition, when the change of the preview display range 120 is received from the user who has given the annotation 111, the candidate for the preview display range 120 may be presented according to the content of the annotation 111.

In the first to third exemplary embodiments described above, in the information processing system 1, the plurality of user terminals 10 are connected wirelessly or by wire via the server 20, and the plurality of user terminals 10 can transmit the document or supply the document. For example, a first user gives the sticky note 110 and the annotation 111 to the document 100 on a first user terminal 10. A second user can display the annotation 111 and the preview display range 120 that is the part of the content of the document 100 corresponding to the annotation 111 without opening the document 100 on a second user terminal 10. Then, the second user can perform required work by pressing the work button 128 given to the preview display range 120.

It should be noted that, instead of the configurations of the first to third exemplary embodiments described above, the configuration may be changed to a configuration in which the server 20 can correspond to the information processing system according to the present disclosure. For example, the data may be on the cloud provided via the server 20, and the user terminal 10 may perform only display and input.

It is also possible to realize the processing of the user terminal 10 and the server 20 described above by a dedicated hardware circuit. In this case, the processing may be executed by one hardware, or may be executed by a plurality of pieces of hardware.

In addition, a program for operating the user terminal 10 and the server 20 may be provided by a computer-readable recording medium, such as a universal serial bus (USB) memory, a flexible disk, or a compact disc read only memory (CD-ROM), or may be provided online via a network, such as the Internet. In this case, the program recorded on the computer-readable recording medium is usually transferred to and stored in a memory, a storage, or the like. In addition, for example, the program may be provided as independent application software, or may be incorporated into software of each device as a function of the user terminal 10.

It should be noted that, although the present invention has been described in detail with respect to specific exemplary embodiments, the present invention is not limited to such exemplary embodiments, and it will be apparent to a person skilled in the art that various other exemplary embodiments are possible within the scope of the present invention.

### [Supplementary Note]

(((1))) An information processing system comprising:
   at least one processor configured to:
   display an annotation given to a document on a display screen together with partial information specified as a part of a content of the document corresponding to a content of the annotation.
(((2)))
   The information processing system according to (((1))), wherein the processor is configured to:
   in a case in which a reduction image representing information on the document displayed on the display screen is selected, display the annotation and the partial information in association with the reduction image without opening the document.
(((3)))
   The information processing system according to (((1))) or (((2))), wherein the processor is configured to:
   when a plurality of annotations are given to the document, display the plurality of annotations and the partial information corresponding to the annotations in a list on the display screen.
(((4)))
   The information processing system according to (((1))) or (((2))), wherein the processor is configured to:
   when a plurality of annotations are given to the document, display the plurality of annotations in a list on the display screen; and
   when the annotation displayed on the display screen is selected, display the partial information corresponding to the annotation on the display screen.
(((5)))
   The information processing system according to any one of (((1))) to (((4))), wherein the processor is configured to:
   when work information that requires work on the document is acquired from the content of the annotation, display a work instruction item for transitioning from the partial information to a work processing screen on the display screen.
(((6)))
   The information processing system according to any one of (((1))) to (((5))), wherein the processor is configured to:
   specify the partial information by executing an analysis of a content of information described in a vicinity of a position to which the annotation is given in the document.
(((7)))
   The information processing system according to (((6))),
   wherein a range of the partial information differs according to an attribute of the annotation.
(((8)))
   The information processing system according to (((6))) or (((7))),
   wherein the content of the information is an image described in the document, and the processor is configured to:
   specify the partial information such that at least a part of the image is included.
(((9)))
   The information processing system according to (((6))) or (((7))),
   wherein the content of the information includes text information described in the document, and
   the processor is configured to:
      execute the analysis by a natural language analysis to specify the partial information such that the text information includes a specific meaning content.
(((10)))
   The information processing system according to any one of (((1))) to (((5))), wherein the processor is configured to:
   specify the partial information based on a selection operation of the part of the content of the document by a person who has given the annotation.
(((11)))
   The information processing system according to any one of (((1))) to (((10))), wherein the processor is configured to:
   receive a change of the partial information by a person who has given the annotation for the partial information specified based on the content of the annotation.
(((12)))
   The information processing system according to (((11))), wherein the processor is configured to:
   when the change of the partial information is received from the person who has given the annotation, present a candidate for a range of the partial information according to the content of the annotation.
(((13)))
   An information processing program causing a computer to execute a process comprising:
   displaying an annotation given to a document on a display screen together with partial information specified as a part of a content of the document corresponding to a content of the annotation.

With the information processing system according to (((1))), as compared to a configuration in which a part of a document is uniformly displayed together with an annotation given to the document regardless of a content of the annotation in a case in which the annotation is displayed together with the part of the document, it is possible to display the partial information that is the part of the content of the document related to the content of the annotation.

With the information processing system according to (((2))), as compared to a case in which the partial information is displayed when the annotation is selected in a state in which the document is opened, it is possible to quickly check the location of the annotation given to the document and the partial information related to the content of the annotation.

With the information processing system according to (((3))), as compared to a case in which the partial information related to the content of the annotation is displayed when the annotation displayed on the display screen is selected, it is possible to quickly check the annotation and the partial information.

With the information processing system according to (((4))), as compared to a case in which the annotation and the partial information are displayed in a list on the display screen, it is possible to secure a space for displaying a large number of annotations.

With the information processing system according to (((5))), as compared to a case in which the work is performed by opening the document and moving to the location of the annotation in the document, it is possible to quickly perform work processing on the annotation.

With the information processing system according to (((6))), as compared to a case in which only the partial information designated by a user is displayed, it is possible to quickly display the partial information.

With the information processing system according to (((7))), as compared to a case in which the partial information is uniformly displayed regardless of the attribute of the annotation, it is easy to check the partial information.

With the information processing system according to (((8))), as compared to a case in which the partial information is displayed only by the text information, it is easy to check the partial information related to the annotation.

With the information processing system according to (((9))), as compared to a case in which the text information is displayed as the partial information without any changes, it is easy to check the partial information related to the annotation.

With the information processing system according to (((10))), as compared to a case in which the range of the partial information corresponding to the annotation is uniformly set, it is easy to reflect the intention of the person who has given the annotation.

With the information processing system according to (((11))), as compared to a case in which the partial information cannot be changed, it is easy to reflect the intention of the person who has given the annotation.

With the information processing system according to (((12))), as compared to a case in which the partial information is designated only manually by the user, it is easy to change the partial information.

With the information processing program according to (((13))), it is possible to, in a case in which the annotation given to the document is displayed together with the part of the document, display the partial information that is the part of the content of the document related to the content of the annotation, as compared to a configuration in which the part of the document is uniformly displayed together with the annotation regardless of the content of the annotation.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
10: user terminal (example of information processing system)
11: CPU (example of processor)
16: display unit (example of display screen)
100: document
101: reduction image
111: annotation (example of annotation)
120: preview display range (example of partial information)
125: text information
127: image
129: table (example of image)
142: list screen
150: display screen
160: action item (example of work instruction item)
200: document
201: reduction image
211: annotation (example of annotation)
220: preview display range (example of partial information)
222B: preview display range (example of partial information)
224B: preview display range (example of partial information)
225E: table (example of image)
231C: text information

## Claims

1. An information processing system comprising:
at least one processor configured to:
display an annotation given to a document on a display screen together with partial information specified as a part of a content of the document corresponding to a content of the annotation.

2. The information processing system according to claim 1, wherein the processor is configured to:
in a case in which a reduction image representing information on the document displayed on the display screen is selected, display the annotation and the partial information in association with the reduction image without opening the document.

3. The information processing system according to claim 1 or 2, wherein the processor is configured to:
when a plurality of annotations are given to the document, display the plurality of annotations and the partial information corresponding to the annotations in a list on the display screen.

4. The information processing system according to claim 1 or 2, wherein the processor is configured to:
when a plurality of annotations are given to the document, display the plurality of annotations in a list on the display screen; and
when the annotation displayed on the display screen is selected, display the partial information corresponding to the annotation on the display screen.

5. The information processing system according to any one of claims 1 to 4, wherein the processor is configured to:
when work information that requires work on the document is acquired from the content of the annotation, display a work instruction item for transitioning from the partial information to a work processing screen on the display screen.

6. The information processing system according to any one of claims 1 to 5, wherein the processor is configured to:
specify the partial information by executing an analysis of a content of information described in a vicinity of a position to which the annotation is given in the document.

7. The information processing system according to claim 6,
wherein a range of the partial information differs according to an attribute of the annotation.

8. The information processing system according to claim 6 or 7,
wherein the content of the information is an image described in the document, and the processor is configured to:
specify the partial information such that at least a part of the image is included.

9. The information processing system according to claim 6 or 7,
wherein the content of the information includes text information described in the document, and
the processor is configured to:
execute the analysis by a natural language analysis to specify the partial information such that the text information includes a specific meaning content.

10. The information processing system according to any one of claims 1 to 5, wherein the processor is configured to:
specify the partial information based on a selection operation of the part of the content of the document by a person who has given the annotation.

11. The information processing system according to any one of claims 1 to 10, wherein the processor is configured to:
receive a change of the partial information by a person who has given the annotation for the partial information specified based on the content of the annotation.

12. The information processing system according to claim 11, wherein the processor is configured to:
when the change of the partial information is received from the person who has given the annotation, present a candidate for a range of the partial information according to the content of the annotation.

13. An information processing program causing a computer to execute a process comprising:
displaying an annotation given to a document on a display screen together with partial information specified as a part of a content of the document corresponding to a content of the annotation.

14. An information processing method comprising:
displaying an annotation given to a document on a display screen together with partial information specified as a part of a content of the document corresponding to a content of the annotation.

## Amended claims

### Amended claims in accordance with Rule 137(2) EPC.

1. An information processing system (1) comprising:
at least one processor (11) configured to:
display an annotation given to a document (100) on a display screen (16) together with partial information specified as a part of a content of the document (100) corresponding to a content of the annotation;
specify the partial information by executing an analysis of a content of information described in a vicinity of a position to which the annotation is given in the document (100),
wherein in addition to the analysis, the partial information is specified based on a keyword included in the annotation.

2. The information processing system (1) according to claim 1, wherein the processor (11) is configured to:
in a case in which a reduction image representing information on the document (100) displayed on the display screen (16) is selected, display the annotation and the partial information in association with the reduction image without opening the document (100).

3. The information processing system (1) according to claim 1 or 2, wherein the processor (11) is configured to:
when a plurality of annotations are given to the document (100), display the plurality of annotations and the partial information corresponding to the annotations in a list on the display screen (16).

4. The information processing system (1) according to claim 1 or 2, wherein the processor (11) is configured to:
when a plurality of annotations are given to the document (100), display the plurality of annotations in a list on the display screen (16); and
when the annotation displayed on the display screen (16) is selected, display the partial information corresponding to the annotation on the display screen (16).

5. The information processing system (1) according to any one of claims 1 to 4, wherein the processor (11) is configured to:
when work information that requires work on the document (100) is acquired from the content of the annotation, display a work instruction item for transitioning from the partial information to a work processing screen on the display screen (16).

6. The information processing system (1) according to claim 1,
wherein a range of the partial information differs according to an attribute of the annotation.

7. The information processing system (1) according to claim 1 or 6,
wherein the content of the information is an image described in the document (100), and
the processor (11) is configured to:
specify the partial information such that at least a part of the image is included.

8. The information processing system (1) according to claim 1 or 6,
wherein the content of the information includes text information described in the document (100), and
the processor (11) is configured to:
execute the analysis by a natural language analysis to specify the partial information such that the text information includes a specific meaning content.

9. The information processing system (1) according to any one of claims 1 to 5, wherein the processor (11) is configured to:
specify the partial information based on a selection operation of the part of the content of the document (100) by a person who has given the annotation.

10. The information processing system (1) according to any one of claims 1 to 9, wherein the processor (11) is configured to:
receive a change of the partial information by a person who has given the annotation for the partial information specified based on the content of the annotation.

11. The information processing system (1) according to claim 10, wherein the processor (11) is configured to:
when the change of the partial information is received from the person who has given the annotation, present a candidate for a range of the partial information according to the content of the annotation.

12. An information processing program causing a computer to execute a process comprising:
displaying an annotation given to a document (100) on a display screen (16) together with partial information specified as a part of a content of the document (100) corresponding to a content of the annotation;
specifying the partial information by executing an analysis of a content of information described in a vicinity of a position to which the annotation is given in the document (100),
wherein in addition to the analysis, the partial information is specified based on a keyword included in the annotation.

13. An information processing method comprising:
displaying an annotation given to a document (100) on a display screen (16) together with partial information specified as a part of a content of the document (100) corresponding to a content of the annotation;
specifying the partial information by executing an analysis of a content of information described in a vicinity of a position to which the annotation is given in the document (100),
wherein in addition to the analysis, the partial information is specified based on a keyword included in the annotation.
